# FASCICULE DE BREVET EUROPEEN

(11) **EP 0 427 141 B1**
(45) Date de publication et mention de la délivrance du brevet: **11.01.1995**
(21) Numéro de dépôt: 90121037.7
(22) Date de dépôt: 02.11.1990
(51) Int. Cl.: H01M 2/14, H01M 4/04, H01M 4/02

(54) **Procédé d'habillage d'une électrode à support mousse pour générateur électrochimique et électrode obtenue par ce procédé**
Verfahren zum Beziehen einer Elektrode mit schaumförmigem Träger für elektroschemischen Generator und nach diesem Verfahren erhaltene Elektrode
Method for covering an electrode with a sponge like support for electrochemical generator and electrode obtained by this process

(30) Priorité: 07.11.1989 FR 8914588
(43) Date de publication de la demande: 15.05.1991
(73) Titulaire: SAFT (inscrite au Registre du Commerce sous le numéro 343 588 737), F-93230 Romainville (FR)
(72) Inventeur: Caillon, Georges, F-33520 Bruges (FR); Lebarbier, Cyrille, F-16440 Roullet Saint Estèphe (FR)
(74) Mandataire: Weinmiller, Jürgen

(56) Documents cités:
- EP-A- 0 271 043
- FR-A- 2 302 595
- FR-A- 2 335 062
- FR-A- 2 349 963
- CHEMICAL ABSTRACTS, vol. 84, no. 14, 5 avril 1976, page 165, résumé no. 92680q,Columbus, Ohio, US; && JP-A-75 145 833 (MATSUSHITA ELECTRIC INDUSTRIAL CO., LTD) 22-11-1975
- PATENT ABSTRACTS OF JAPAN, vol. 13, no. 150 (E-742)[3498], 12 avril 1989;& JP-A-63 310 555 (ASAHI CHEM. IND. CO.) 19-12-1988
- CHEMICAL ABSTRACTS, vol. 111, no. 26, 25 décembre 1989, page 222, abrégé no.236678p, Columbus, Ohio, US; & JP-A-01 211 857 (HITACHI) 25-08-1989
- CHEMICAL ABSTRACTS OF JAPAN, vol. 99, no. 12, 19 septembre 1983, page 171,résumé no. 91073j, Columbus, Ohio, US; &JP-A-58 08 555 (MATSUSHITA ELECTRIC INDUSTRIAL CO., LTD) 16-02-1983
- PATENT ABSTRACTS OF JAPAN, vol. 11, no. 240 (E-529)[2687], 6 août 1987;& JP-A-62 52 855 (SHIN KOBE ELECTRIC MACH. CO., LTD) 07-03-1987
- PATENT ABSTRACTS OF JAPAN, vol. 5, no. 40 (E-49)[712], 17 mars 1981; & JP-A-55165576 (FURUKAWA DENCHI K.K.) 24-12-1980
- CHEMICAL ABSTRACTS, vol. 91, no. 2, 9 juillet 1979, abrégé no. 7342a, Columbus,Ohio, US; & JP-A-79 51 141 (MATSUSHITA ELECTRIC INDUSTRIAL CO., LTD)03-02-1979

## Description

La présente invention concerne un procédé d'habillage d'une électrode à support mousse pour générateur électrochimique et une électrode obtenue par ce procédé. Elle se rapporte notamment mais non exlusivement aux générateurs électrochimiques étanches à électrolyte alcalin à électrodes spiralées dont au moins une électrode comporte un support poreux métallique chargé de matière active. Ce support présente une structure matricielle comparable à une éponge dont les cellules sont connectées les unes aux autres dans un réseau tridimensionnel : il est désigné par le terme "mousse". La porosité de la mousse hors matière active est supérieure à 90 %.

Après le chargement de la matière active dans l'électrode, cette dernière est comprimée de façon que son épaisseur soit ajustée, que son assemblage soit facilité, et que le bon fonctionnement du générateur soit ainsi assuré.

Lorsque l'on effectue un spiralage de deux électrodes avec une bande de séparateur interposée, on doit utiliser un séparateur présentant une résistance à la traction élevée (supérieure à 50 N pour un séparateur de largeur 5 cm par exemple). Un tel séparateur est habituellement constitué d'une feuille à base de fibres en polyamide ou en polypropylène présentant un diamètre de l'ordre de 25 micromètres.

Dans la demande de brevet japonais JP-A-75 145 833, on habille l'électrode en disposant de part et d'autre du support poreux métallique de type mousse chargé de matière active, une couche de tissu en fibres de polypropylène et on comprime l'ensemble obtenu. Pour obtenir une certaine adhérence des couches de tissu de polypropylène sur la mousse, il est nécessaire de coller préalablement à chaud sur ce tissu des fibres de chlorure de vinyle.
Ce procédé est compliqué et coûteux. En outre la mise en oeuvre d'un composé chloré au contact de l'électrode positive est particulièrement contre-indiquée, surtout dans un accumulateur étanche qui constitue le domaine d'application préférentiel de la présente invention ; en effet ces composés libèrent des chlorures dans un boîtier fermé et causent ainsi une corrosion irréversible des électrodes.

La présente invention a pour but d'éviter cet inconvénient et de proposer un procédé d'habillage d'une électrode, plus simple que le procédé connu, permettant malgré tout d'assurer une bonne adhérence du séparateur sur l'électrode, ainsi qu'une amélioration des performances électrochimiques du générateur.

La présente invention a pour objet un procédé d'habillage d'une électrode pour générateur électrochimique selon les revendications 1 à 4.

On observe une adhérence forte des séparateurs sur toute la surface du support.

Grâce au procédé selon l'invention, une électrode à support "mousse" peut être équipée de séparateurs en fibres de polyoléfine ayant un diamètre inférieur à 5 micromètres, ces séparateurs présentant une résistance à la traction dix fois plus faible que celle des séparateurs classiques.

Le grammage de ces séparateurs est de préférence compris entre 5 et 50 g/m².

De telles électrodes peuvent être spiralées par les procédés habituels de spiralage, avec éventuellement un séparateur supplémentaire interposé. Un tel séparateur en polyamide ou en polypropylène a des fibres dont le diamètre est de l'ordre de 20 micromètres, avec un grammage compris entre 60 et 90 g/m².

Selon un mode de réalisation préférentiel, les dimensions des deux couches de séparateur sont choisies pour que ces deux couches puissent se rejoindre et protéger les bords du support. Il convient bien entendu de tenir compte de l'allongement des différents composants lors de la compression.

Il est préférable que ledit support soit muni de sa connexion électrique avant d'être pourvu de ses deux couches de séparateur.

La présente invention a également pour objet une électrode pour générateur électrochimique comportant un support poreux métallique de type mousse, chargé de matière active et muni d'une connexion électrique, caractérisée par le fait que dans ses deux faces sont incrustées respectivement deux couches de séparateur à base de fibres en polyoléfine dont le diamètre est inférieur à 5 micromètres, ledit séparateur ayant un grammage compris entre 5 et 50 g/m².

La présente invention présente de nombreux avantages.

Tout d'abord la structure fibreuse du séparateur renforce de façon sensible l'aptitude à la flexion de l'électrode. Il en résulte une plus grande facilité de spiralage. De plus, il est possible d'utiliser des supports en mousse plus fragiles ou à grammage inférieur à celui des supports habituels.

Par ailleurs, pour une même quantité de matière de séparateur, le séparateur à fibres très fines selon l'invention présente une mouillabilité par l'électrolyte accrue, un meilleur pouvoir filtrant et isolant à l'encontre des matières solides et des électrons qui ne doivent pas traverser le séparateur, et ceci sans que soit altérée la perméabilité aux ions.

Le procédé selon l'invention permet la mise en oeuvre d'un séparateur intermédiaire supplémentaire ; si une des couches de séparateur présente un défaut susceptible d'affaiblir localement ses caractéristiques de filtration et d'isolement, la superposition de plusieurs couches annule pratiquement les effets d'un tel défaut.

Les séparateurs à fibres très fines étant moins coûteux que les séparateurs classiques, on peut, soit abaisser le coût global des séparateurs dans un accumulateur, soit utiliser une option à plusieurs couches plus performante pour le même coût.

Enfin, les deux couches de séparateur d'une électrode selon l'invention protègent l'environnement des poussières de matière active que l'électrode peut abandonner. Ceci évite un traitement de ces électrodes en surface et en volume par des produits anti-poussières, traitement dit de fibrillation ou de "postcoating". Les poussières présentes aux postes de travail sont considérablement limitées. Il en résulte une amélioration des conditions de travail et une réduction des risques pour la santé des opérateurs.

Si le procédé selon l'invention est particulièrement avantageux pour les électrodes spiralées des accumulateurs cylindriques, il est également très intéressant pour les électrodes planes. On obtient en effet des électrodes à support mousse avec une gaine adhérant à toute la surface du support ; on bénéficie ainsi d'une grande partie des avantages précités.

D'autres caractéristiques et avantages de la présente invention apparaîtront au cours de la description suivante de modes de réalisation donnés à titre illustratif mais nullement limitatif.

Dans le dessin annexé :
- La figure 1 est une vue en perspective éclatée d'un support d'électrode selon l'invention avec deux couches de séparateur avant compression.
- La figure 2 est une vue en perspective des constituants de la figure 1 après compression.
- La figure 3 est une vue agrandie d'un détail A de la figure 2.

### EXEMPLE 1

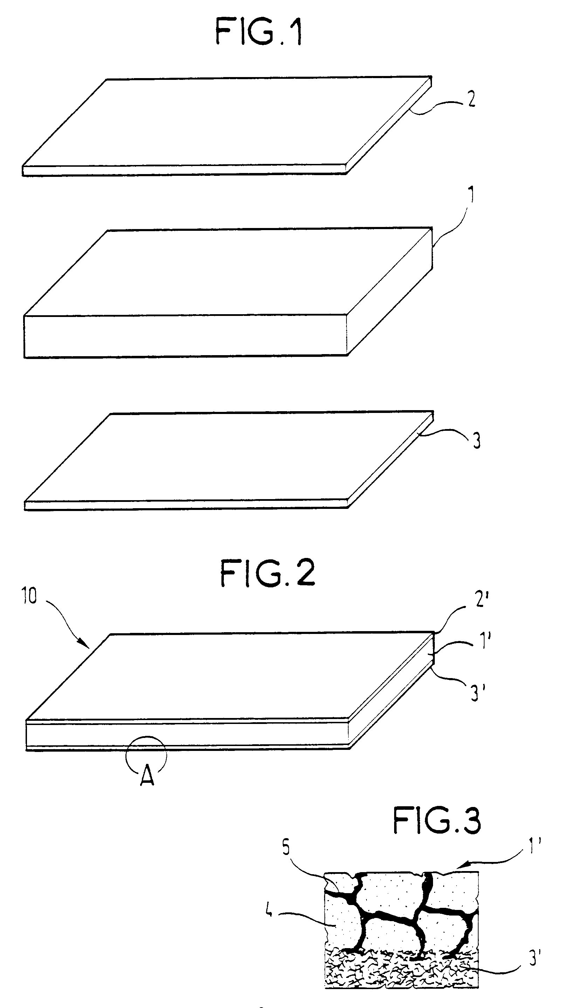

On voit dans la figure 1 un support 1 en mousse de nickel, de grammage 5 g/dm² et d'épaisseur 1,1 mm, présentant une porosité initiale supérieure à 90 %. Ce support est chargé de 17 g/dm² de matière active à base d'hydroxyde de nickel, de cobalt et de cadmium. Ce support peut être muni d'une connexion électrique (non illustrée).
Deux couches de séparateurs 2 et 3 sont disposées de part et d'autre du support 1. Chaque couche dont l'épaisseur est de l'ordre de 0,1 mm est à base de fibres en polypropylène, présentant un diamètre compris entre 0,5 et 5 micromètres. Son grammage est de 50 g/m².

Après compression, on obtient une électrode 10 d'épaisseur 0,7 mm (voir figure 2) avec ses trois constituants 1′, 2′, 3′. L'épaisseur de chaque couche 2′, 3′ est de l'ordre de 0,015 mm. On voit à l'échelle agrandie dans la figure 3 les parois 5 en nickel du support 1′ formant des cavités pour la matière active 4 ; les fibres du séparateur 3′ sont incrustées dans le support 1′, ce qui assure leur très forte adhérence sur toute la surface de ce support.

L'électrode 10 est associée à une électrode négative au cadmium classique pour la réalisation d'un accumulateur nickel-cadmium à électrodes spiralées. Lors de l'opération de spiralage un morceau de séparateur classique en polyamide de grammage compris entre 70 et 90 g/m² est utilisé pour amorcer l'opération et mieux protéger le coeur de la spirale qui constitue toujours la zone la plus exposée au défaut d'isolement.

### EXEMPLE II

On opère de la même manière que dans l'Exemple I avec un support 1 en mousse de nickel de grammage 3,5 g/dm , présentant une épaisseur de 1,1 mm, et chargé de 17 g/dm² de matière active à base d'hydroxyde de nickel, de cobalt et de cadmium. Les couches de séparateur ont un grammage de 16 g/m² et les fibres en polypropylène qui le constituent ont un diamètre compris entre 0,5 et 5 micromètres. L'épaisseur d'un tel séparateur peut être comprise (avant compression) entre 0,05 mm et 0,13 mm.

L'électrode 10 avec ses deux couches de séparateur 2′ et 3′ incrustées dans le support 1′ présente une épaisseur de 0,7 mm après compression. La surépaisseur induite par chaque couche de séparateur est de l'ordre de 0,01 à 0,03 mm. Cette électrode est associée à une électrode négative classique comme dans l'Exemple I, avec un séparateur intermédiaire supplémentaire à fibres de 25 micromètres de diamètre, présentant un grammage de 60 g/m², c'est-à-dire inférieur à celui des séparateurs classiques.

### EXEMPLE III

On utilise le même support que dans l'Exemple II avec une charge de la même matière active à 18 g/dm².
Les couches de séparateur ont un grammage de 25 g/m² avec des fibres en polypropylène de diamètre compris entre 0,5 et 5 micromètres. L'ensemble est comprimé de manière à ce que l'électrode positive 10 ait 0,7 mm d'épaisseur.

On réalise suivant le même procédé une électrode négative dont le support mousse a un grammage de 5 g/dm² et dont la matière active est un alliage à base de lanthane et de nickel. La charge en matière active est de 17 g/dm². On associe à ce support deux couches de séparateur à base de fibres en polypropylène de diamètre compris entre 0,5 et 5 micromètres, et présentant un grammage de 25 g/m². L'ensemble est comprimé pour que l'électrode négative ait une épaisseur de 0,4 mm.

Ces deux électrodes sont disposées en vis à vis et spiralées pour former un générateur nickel-hydrogène basse pression. Lors de l'opération de spiralage un morceau de séparateur classique est utilisé comme dans le premier exemple.

Bien entendu, l'invention n'est pas limitée aux exemples qui viennent d'être décrits. On pourra, sans sortir du cadre de l'invention remplacer tout moyen par un moyen équivalent.

## Revendications

1. Procédé d'habillage d'une électrode pour générateur électrochimique comportant un support poreux métallique (1) de type mousse chargé de matière active, procédé selon lequel on dispose de part et d'autre dudit support une couche de séparateur (2, 3) à base de fibres en polyoléfine, et on comprime l'ensemble ainsi obtenu, caractérisé par le fait que l'on choisit un séparateur constitué de fibres non tissées ayant un diamètre inférieur à 5 micromètres, ledit séparateur ayant un grammage compris entre 5 et 50 g/m², ladite compression ayant pour effet d'incruster lesdites fibres dans ledit support de manière à assurer leur très forte adhérence sur toute la surface de ce support.

2. Procédé d'habillage d'une électrode selon la revendication 1, caractérisé par le fait que l'on choisit les dimensions des deux couches de séparateur de manière que leurs bords se rejoignent et protègent les bords dudit support.

3. Procédé d'habillage d'une électrode selon l'une des revendications précédentes, caractérisé par le fait que, préalablement à la mise en place des couches de séparateur, ledit support est muni d'une connexion électrique.

4. Electrode pour générateur électrochimique comportant un support poreux métallique de type mousse, chargé de matière active et muni d'une connexion électrique, caractérisée par le fait que dans ses deux faces sont incrustées par compression respectivement deux couches de séparateur à base de fibres en polyoléfine dont le diamètre est inférieur à 5 micromètres, le grammage desdites couches étant compris entre 5 et 50 g/m².

## Patentansprüche

1. Verfahren zum Verkleiden einer Elektrode für einen elektrochemischen Generator, wobei die Elektrode eine porösen metallischen Träger (1) der Art eines mit aktivem Material beladenen Schaums aufweist und wobei man nach diesem Verfahren zu beiden Seiten des Trägers eine Separatorschicht (2, 3) auf der Basis von Polyolefinfasern anbringt und die so erhaltene Einheit komprimiert, dadurch gekennzeichnet, daß man einen Separator wählt, der aus nicht verwebten Fasern mit einem Durchmesser von unter 5 Mikrometern besteht und ein Flächengewicht zwischen 5 und 50 g/m² aufweist, wobei die Komprimierung zur Wirkung hat, die Fasern in den Träger derart einzufügen, daß der Separator auf der ganzen Oberfläche dieses Trägers gut haftet.

2. Verfahren zum Verkleiden einer Elektrode nach Anspruch 1, dadurch gekennzeichnet, daß man die Maße der beiden Separatorschichten so wählt, daß ihre Ränder sich vereinigen und die Ränder des Trägers schützen.

3. Verfahren zum Verkleiden einer Elektrode nach einem der vorhergehenden Ansprüche, dadurch gekennzeichnet, daß vor dem Anbringen der Separatorschichten der Träger mit einem elektrischen Anschluß versehen wird.

4. Elektrode für einen elektrochemischen Generator mit einem schaumartigen porösen metallischen Träger, der mit aktivem Material beladen und mit einem elektrischen Anschluß versehen ist, dadurch gekennzeichnet, daß in seine beiden Flächen zwei Separatorschichten auf der Basis von Polyolefinfasern mit einem Durchmesser von weniger als 5 Mikrometer durch Komprimierung eingedrückt sind, wobei das Flächengewicht dieser Schichten zwischen 5 und 50 g/m² liegt.

## Claims

1. Process of preparing an electrode for an electrochemical cell comprising a foamlike porous metal support (1) loaded with active material, in which method there is placed on each side of said support a layer (2, 3) of a separator made of polyolefin fibres and the assembly thus obtained is compressed, characterised in that a separator is chosen made of unwoven fibres having a diameter of less than 5 micrometres and wherein the weight per unit area of said separator layers ranges from 5 g/m² to 50 g/m², the effect of such compression being to embed said fibres in said support so that they adhere strongly to the entire surface thereof.

2. Process as claimed in any one of the foregoing claims of preparing an electrode, characterised in that the dimensions of the two separator layers are selected such that their edges may be joined so as to protect the edges of said support.

3. Process as claimed in any one of the foregoing claims of preparing an electrode, characterised in that, prior to application of the separator layers, said support is equipped with an electrical connection.

4. Electrode for an electrochemical cell comprising a foamlike porous metal support loaded with active material and equipped with an electrical connection, characterised in that in both sides are embedded by compression respective layers of a separator of polyolefin fibres with a diameter of less than 5 micrometres, the weight per unit area of said layers ranging from 5 g/m² to 50 g/m².
